# EUROPÄISCHE PATENTANMELDUNG

(11) **EP 3 262 938 A2**
(43) Veröffentlichungstag der Anmeldung: **03.01.2018**
(21) Anmeldenummer: 17000977.3
(22) Anmeldetag: 09.06.2017
(51) Int. Cl.: A01N 25/10, B27K 3/00

(54) **HOLZBEHANDLUNGSSUBSTANZ, HOLZBEHANDLUNGSVORRICHTUNG SOWIE VERWENDUNG UND VERFAHREN ZUR HOLZBEHANDLUNG**

(30) Priorität: 10.06.2016 DE 102016007093; 18.08.2016 DE 102016009909
(71) Anmelder: IML Instrumenta Mechanik Labor System GmbH, 69168 Wiesloch (DE)
(72) Erfinder: Hunger, Erich, 76133 Karlsruhe (DE); Hunger, Sebastian, 69181 Leimen (DE); Hunger, Fabian, 69181 Leimen (DE)
(74) Vertreter: mepat Patentanwälte

(57) **Zusammenfassung**

Die vorliegende Erfindung betrifft eine Holzbehandlungssubstanz, die eine Zusammensetzung zumindest aus einem Holzbehandlungswirkstoff und einem Trägermaterial (20) aufweist. Die Holzbehandlungssubstanz ist für die Behandlung des Holzes gegen den Befall durch einen ersten Pilz ausgebildet. Der Holzbehandlungswirkstoff weist einen als Antagonist gegen den ersten Pilz wirkenden zweiten Pilz und/oder dessen Pilzsporen auf. Das Trägermaterial (20) weist ein Liquid und ein superabsorbierendes Polymer auf und ist gelartig. Ferner betrifft die Erfindung eine Holzbehandlungsvorrichtung, mit der der Pilz, resp. Sporen, in das Holz verbracht werden und eine Verwendung der Holzbehandlungssubstanz, sowie ein Verfahren zur Behandlung von Holz unter Verwendung einer der erfindungsgemäßen Holzbehandlungsvorrichtungen (1) und der Holzbehandlungssubstanz.

## Beschreibung

Die Erfindung betrifft eine Holzbehandlungssubstanz, die für die Behandlung von Holz gegen den Befall durch einen Pilz ausgebildet ist, sowie Holzbehandlungsvorrichtungen, mit denen die Holzbehandlungssubstanz auf geeignete Weise in Holz eingebracht werden kann, und schließlich das entsprechende Verfahren zur Holzbehandlung.

Aus dem Stand der Technik ist bekannt, dass Holzmasten, Baumstämme und andere Holzobjekte von Zeit zu Zeit einer Prüfung unterzogen werden, bei der der Zustand des vorhandenen Holzes, dessen Imprägnierung und/oder weitere für die Standfestigkeit und Tragfähigkeit maßgebliche Eigenschaften untersucht werden. Dabei ist die Untersuchung auf Fäule im Inneren eine wichtige Untersuchung hinsichtlich der Standfestigkeit.

Aus der DE 10 2014 015 051 B3 ist ein Holzprüfwerkzeug und ein Verfahren bekannt, das eine Untersuchung der Tränktiefe von imprägniertem Holz ermöglicht, indem das Holzprüfwerkzeug in das Holz eingetrieben und damit eine Holzprobe ausgestanzt wird, die einer Sichtprüfung unterzogen werden kann.

Durch derartige Untersuchungen wird ermittelt, in wieweit das Holz geschädigt ist und ob das verbleibende gesunde Holz für die Standfestigkeit ausreichend ist. Sobald das Holz zu stark geschädigt ist, muss der Mast ersetzt oder der Baum gefällt werden. Eine Behandlung des Holzes ist bisher kaum möglich.

Weiter ist aus dem Stand der Technik bekannt, dass zur Tiefenbehandlung von Holz mittels einer Vorrichtung Imprägnierflüssigkeit unter hohem Druck in das Holz geleitet wird. Eine solche Vorrichtung ist beispielsweise aus der DE 2 021 647 U bekannt. Diese Imprägnierung ist vorbeugend durchzuführen und durch die Notwendigkeit von hohen Drücken sehr aufwändig.

Darüber hinaus sind Fungizide bekannt, die selbst Pilze enthalten und zur Bekämpfung von Fäulnis bei befallenem Holz oder zur Vorbeugung eingesetzt werden. Ein solches Fungizid ist beispielsweise aus WO 93/08694 bekannt.

Ausgehend von diesem Stand der Technik ist es Aufgabe der vorliegenden Erfindung, eine Substanz zu schaffen, die explizit der Behandlung von schädigendem Holzpilz dient und die bewirkt, die Holzsubstanz von lebendem oder totem Holz bestmöglich zu erhalten.

Diese Aufgabe wird durch eine Holzbehandlungssubstanz mit den Merkmalen des Anspruchs 1 gelöst.

Weiter ergibt sich ausgehend vom Stand der Technik die Aufgabe, eine Vorrichtung bereitzustellen, mit der eine Behandlung von Holz, in dem Fäulnis durch Holzpilz erkannt wurde, unter Erhalt der Holzsubstanz auf einfache Weise ermöglicht wird.

Diese Aufgabe wird durch eine Holzbehandlungsvorrichtung mit den Merkmalen des Anspruchs 5 gelöst.

Die weitere Aufgabe ist es, ein Behandlungsverfahren für pilzbefallenes Holz zu schaffen.

Diese Aufgabe wird durch das Verfahren mit den Merkmalen des Anspruchs 17 gelöst.

Weiterbildungen der Substanz, aber auch der Vorrichtungen und des Verfahrens sind in den jeweiligen Unteransprüchen ausgeführt.

In einer ersten Ausführungsform der erfindungsgemäßen Holzbehandlungssubstanz weist diese eine Zusammensetzung auf, die wenigstens einen Holzbehandlungswirkstoff und ein Trägermaterial enthält. Die Holzbehandlungssubstanz ist explizit für die Behandlung des Holzes gegen den Befall durch einen ersten Pilz rezeptiert und geschaffen. Der "erste Pilz° ist dabei als ein Schadpilz für Holz zu verstehen. Erfindungsgemäß weist daher der Holzbehandlungswirkstoff einen als Antagonist gegen diesen ersten Pilz, resp. Schadpilz, wirkenden zweiten Pilz und/oder dessen Pilzsporen auf. Das Trägermaterial ist aus einem Liquid und einem superabsorbierenden Polymer beschaffen und daher gelartig, so dass die Holzbehandlungssubstanz eine vorteilhafte Form aufweist, um in Holz eingebracht zu werden und um dort auch zu verbleiben und dem Antagonisten Zeit zur Entwicklung zu verschaffen und durch eigenes Aufwachsen den Schadpilz zu verdrängen.

Der Antagonist wird von dem Trägermaterial aufgenommen, das in gelartigem Zustand vorliegt. Bei der Herstellung der Zusammensetzung wird daher der Antagonist als Pilz oder Sporen in dieses Gel eingetragen.

In einer besonders bevorzugten Ausführungsform ist der als Antagonist wirkende zweite Pilz ein Schimmelpilz, wie bevorzugt *Trichoderma harzianum, Trichoderma koningiopsis* oder ein Gemisch aus beiden. Bei *Trichoderma harzianum* kann es sich bevorzugt um das Produkt *Trichoderma harzianum* Empa 720, und bei *Trichoderma koningiopsis* kann es sich um das Produkt *Trichoderma koningiopsis* Empa 723 handeln.

*Trichoderma harzianum* Empa 720 ist spezifiziert und beim Centraalbureau voor Schimmelcultures, Fungal Biodiversity Centre, Institute of the Royal Netherlands Academy of Arts and Sciences, Uppsalalaan 8, 3584 CT Utrecht, The Netherlands, unter der Eingangsnummer CBS 140589 *Trichoderma harzianum* Empa 720, EMPL No. LN881560, und ebenda auch *Trichoderma koningiopsis unter* CBS 141192 *Trichoderma koningiopsis* Empa 723, EMPL No. LN881563.

Vorteilhaft ist ferner in einer weiteren bevorzugten Ausführungsform der Holzbehandlungssubstanz als Liquid Wasser einzusetzen und ferner können auch Nährstoffe für den Pilz beigegeben werden. Diese können etwa Glukose oder Harnstoff oder ein Gemisch aus beidem sein. Das Wasser enthalten ist, ist für das Überleben der Sporen nötig.

Die Holzbehandlungssubstanz kann in einer weiteren Ausführungsform 1 bis 10 g, bevorzugt 4 bis 6 g superabsorbierendes Polymer aufweisen.

Bevorzugt enthält die Holzbehandlungssubstanz in der gelartigen Trägersubstanz mindestens 800 000 Sporen pro ml H₂O, bevorzugt 1.000.000 Sporen, was 106 KBE (Koloniebildende Einheiten) entspricht und gegebenenfalls auch mehr, etwa 110 oder mehr KBE pro ml H₂O. Die Menge an koloniebildenden Sporen muss jedenfalls so gewählt sein, dass eine stabile Kolonie mit Wachstumspotenzial ausgebildet wird.

Es kann sich bei der Holzbehandlung um eine vorbeugende Behandlung handeln, aber auch um eine Behandlung geschädigter Bereiche, beispielsweise Bereiche mit Fäule, die durch Pilze verursacht wird. Soll eine mit Pilz befallene Stelle behandelt werden, so ist es möglich, einen Antagonisten einzusetzen. Das bedeutet, dass ein anderer Holzpilz eingesetzt wird, der das Holz nicht schädigt, aber so dominant ist, dass er den schädlichen Pilz verdrängt. Dieser Antagonist (zweiter Pilz) breitet sich wie der Schadpilz (erster Pilz) im Holz aus, dabei vergehen nicht nur Tage, sondern Wochen und Monate. Es ist dabei vorteilhaft, wenn der Antagonist sich schneller als der Schadpilz ausbreitet, damit der schädliche Pilz verdrängt wird, bevor die Schädigung des Holzes zu groß wird. Entsprechend ist die Einbringung des Antagonisten in Bezug auf Positionierung und Menge im Holz zu wählen.

Behandlung von Holz meint im Übrigen Holz in Form von Holzmasten oder anderen Holzobjekten, aber auch die Behandlung von lebendem Holz an Baumstämmen oder Ästen.

Eine erste Ausführungsform einer Holzbehandlungsvorrichtung, die dazu gestaltet ist, Holz gegen Schadpilze vorbeugend oder bereits nach Befall zu behandeln, hat ein Innenende, ein von dem Innenende abgewandtes Außenende und einen zylindrischen Hohlkörper mit wenigstens einer Austrittsöffnung. Dabei kommen das Innenende und die zumindest eine Austrittsöffnung bei der Anwendung, also der Behandlung von Holz, innerhalb des Holzes zu liegen. Der zylindrische Hohlkörper hat ganz allgemein einen Aufnahmeraum, in dem die ebenfalls erfindungsgemäße Holzbehandlungssubstanz vorliegt, die ein Trägermaterial mit Holzbehandlungswirkstoff aufweist. Die Holzbehandlungsvorrichtung kann dabei zu jedem geeigneten Zeitpunkt mit der Holzbehandlungssubstanz befüllt oder nachbefüllt werden.

Nach einer ersten Gestaltungsvariante der erfindungsgemäßen Holzbehandlungsvorrichtung weist diese außer dem zylindrischen Hohlkörper mit Innenende, Außenende, Aufnahmeraum und Austrittsöffnung einen Schubstift auf. Der Schubstift, der sich entlang der Längsachse des zylindrischen Hohlkörpers in diesem erstreckt, ist von außerhalb des zylindrischen Hohlkörpers von der Außenseite her verschiebbar und weist zumindest einen Verschlussabschnitt auf, der in einem Nichtanwendungszustand die zumindest eine Austrittsöffnung verschließt und in einem Anwendungszustand der Holzbehandlungsvorrichtung nach dem Verschieben die zumindest eine Austrittsöffnung freigibt ("öffnet") und den Aufnahmeraum mit dem Holz in Kontakt bringt. Die in dem Aufnahmeraum vorliegende Holzbehandlungssubstanz wird durch eine entsprechende Position des Schubstifts am Austreten gehindert.

Der Schubstift dient also lediglich dazu, gezielt die eine oder mehrere Austrittsöffnung(en) zu öffnen oder frei zu geben. Die Vorrichtung ist so ausgestaltet, dass eine in dem Aufnahmeraum befindliche Substanz lediglich durch frei Geben der Öffnungen in das Holz übertritt. Dabei ist "übertreten" als druckloses Übergehen zu verstehen, also ohne Druck, wie er ausgeübt wird bei einem Kolben-Zylinder-System einer Spritze oder ähnlichem. Der erfindungsgemäße Schubstift ist kein Kolben und wirkt auch nicht als solcher; andere Druckmittel werden ebenfalls nicht eingesetzt. Entsprechend benötigt die erfindungsgemäße Vorrichtung auch keine Düse oder ähnliche Hilfsmittel zur druckabhängigen Ausbringung der Holzbehandlungssubstanz. Im Unterschied zum Eindrücken eines Kolbens in einen Zylinder wie bei einer Spritze, was hierin unter "hohem Druck" verstanden wird und was je nach Kraftaufwand mit "sehr hohem Druck" geleistet werden kann, wird hierin der Schubstift als "quasi drucklos" betätigbar verstanden, das Eindrehen dient lediglich dem frei Geben der Öffnungen. Ein Eindrücken oder Pressen der Holzbehandlungssubstanz ist nicht gewünscht, weil die Struktur des Holzes nicht durch Druck beeinflusst, besonders nicht negativ beeinflusst werden soll.

Mit "Nichtanwendungszustand" ist dabei der Zustand vor einer Anwendung gemeint und mit "Anwendungszustand" der Zustand, in dem die Holzbehandlungsvorrichtung in das Holz eingebracht wird. "In Kontakt bringen" des Aufnahmeraumes mit dem Holz meint bei beiden Varianten der Vorrichtung, dass zwischen Holz und Aufnahmeraum in dem Hohlkörper über die Austrittsöffnungen eine offene Verbindung entsteht, so dass das Holzbehandlungsmittel über die Austrittsöffnungen austreten und in das Holz gelangen kann.

Die Holzbehandlungsvorrichtung wird zur Anwendung in das Holz eingeschoben oder eingeschlagen, so dass die Austrittsöffnung oder -öffnungen in oder nahe an den zu behandelnden Stellen liegen. Dann erst wird bei dieser Variante der Schubstift verschoben und damit die Austrittsöffnung(en) frei gegeben. Das Verschieben des Schubstiftes kann durch ein Eindrücken in den zylindrischen Hohlkörper mit einem Finger oder einem Durchschlag, aber auch durch ein nach außen ragendes Ende des Schubstiftes erfolgen.

"Verschieben" des Schubstiftes meint eine Bewegung des Schubstiftes entlang der Längsachse oder auch eine Drehung um diese Achse oder eine gemischte Dreh-Schub-Bewegung.

Der Aufnahmeraum wird so mit dem umliegenden Holz verbunden. Das Trägermaterial kann mit dem Schubstift mit verschoben werden, so dass es teilweise in die Austrittsöffnungen geschoben wird oder der Aufnahmeraum wird durch das Verschieben des Schubstiftes vergrößert, so dass sich das Trägermaterial in dem vergrößerten Aufnahmeraum verteilt. Mit oder ohne direkten Kontakt des Trägermaterials mit dem Holz kann sich der Holzbehandlungswirkstoff vom Trägermaterial aus ausbreiten und auf das Holz übergehen. Die Holzbehandlungsvorrichtung verbleibt in dem Holz, so dass sich der Holzbehandlungswirkstoff über einen längeren Zeitraum ausbreiten kann und nicht durch hohen Druck in die gewünschten Bereiche gepresst werden muss.

In einer Ausführungsform liegt die Holzbearbeitungsvorrichtung bereits mit Trägermaterial und Holzbehandlungswirkstoff befülltem Aufnahmeraum vor, so dass diese direkt zur Anwendung eingesetzt werden kann. Denkbar sind Holzbearbeitungsvorrichtungen, die für unterschiedliche Anwendungen, vorbeugend oder gegen einen Befall, eingesetzt werden können, die mit unterschiedlichen Wirkstoffen, resp. zweiten Pilzen versehen sind. Dabei sind sehr spezielle Wirkstoffe genauso wie breitflächig einsetzbare Wirkstoffe, biologische oder chemische Produkte und Trägermaterialien möglich.

In weiteren Ausführungsformen der Holzbehandlungsvorrichtung bildet die am Innenende des zylindrischen Hohlkörpers liegende Stirnseite eine Austrittsöffnung. Diese Austrittsöffnung wird im Nichtanwendungszustand durch eine Einschlagspitze verschlossen, die am Innenende des Schubstiftes vorliegt. Die Einschlagspitze ist in dieser Variante einer der Verschlussabschnitte. Nach einem Verschieben des Schubstiftes wird ein ringförmiger Spalt freigegeben, durch den der Aufnahmeraum mit dem Holz in Kontakt kommt. Die Einschlagspitze erleichtert dabei das Einschlagen oder Einschieben der Holzbearbeitungsvorrichtung, indem sie störendes Holz verdrängt.

Die am Innenende des zylindrischen Hohlkörpers liegende Stirnseite kann jedoch auch verschlossen sein, so dass die Austrittsöffnung(en) ausschließlich an der Mantelfläche des zylindrischen Hohlkörpers vorliegen. In dieser Ausführungsform ist es möglich, den Schubstift derart zu gestalten, dass dieser aus dem zylindrischen Hohlkörper entnommen, erneut mit Trägermaterial mit Holzbehandlungswirkstoff befüllt und wieder in den zylindrischen Hohlkörper eingesetzt werden kann.

Die nun verschlossene Stirnseite des zylindrischen Hohlkörpers kann dabei in unterschiedlichen Formen ausgestaltet sein. In einer Ausführungsform bildet die Stirnseite selbst die Einschlagspitze aus.

Die auf der Mantelfläche liegenden Austrittsöffnungen des zylindrischen Hohlkörpers können verschiedene Formen aufweisen und bspw. in den zylindrischen Hohlkörper gebohrte Löcher oder Langlöcher, aber auch Schlitze in Längs- oder Querrichtung sein. Denkbar sind auch schraubenförmig entlang der Mantelfläche gewundene Schlitze oder polygone Ausschnitte. Die Anzahl und Anordnung dieser Austrittsöffnungen kann unterschiedlich gewählt sein. So sind beispielsweise eine oder mehrere Reihen von Austrittsöffnungen, aber auch zufällig und/oder ungleich verteilte Austrittsöffnungen möglich.

Der Schubstift weist zu der Anzahl und Anordnung der Austrittsöffnungen passende Verschlussabschnitte auf, mit denen die Auftrittsöffnungen im Nichtanwendungszustand verschlossen werden können. So können sich die Verschlussabschnitte radial von einer Mittelachse oder einem zentralen Zylinder nach außen erstrecken, wobei sie einzelne Stifte mit prismatischer Form sind. Diese radial liegenden Prismen haben als Grundfläche die Form der Austrittsöffnungen oder eine Grundfläche, die darüber hinausragt, so dass die Austrittsöffnungen vollständig verdeckt werden können. Wird der Schubstift im Anwendungszustand verschoben, so werden diese Verschlussabschnitte von den Austrittsöffnungen gerückt, so dass die Austrittsöffnungen freigegeben werden.

Die Verschlussabschnitte können aber auch großflächiger ausgebildet sein, so dass ein Verschlussabschnitt mehrere Austrittsöffnungen verschließt. So kann ein scheibenförmiger Verschlussabschnitt alle auf eine Umfangslinie liegenden Austrittsöffnungen gleichzeitig verschließen und durch ein Verschieben in axialer Richtung auch freigeben.

Die Verschlussabschnitte, aber auch die übrigen Teile des Schubstiftes können entweder so ausgeformt sein, dass ein einziger Aufnahmeraum innerhalb des zylindrischen Hohlkörpers vorliegt, dem eine oder mehrere Austrittsöffnungen zugeordnet sind oder den Raum so unterteilen, dass mehrere kleinere Aufnahmeräume vorliegen, denen jeweils mindestens eine Austrittsöffnung zugeordnet ist. Denkbar ist auch eine Teilung in mehrere in axialer Richtung hintereinander angeordnete Aufnahmeräume, die jeweils durch die gleichen Austrittsöffnungen in Kontakt mit dem Holz gebracht werden, indem der Schubstift Stück für Stück verschoben wird.

Nach einer ersten Ausführungsform einer zweiten Gestaltungsvariante der erfindungsgemäßen Holzbehandlungsvorrichtung weist der zylindrische Hohlkörper das Innenende und das von dem Innenende abgewandte Außenende auf. Erfindungsgemäß umfasst diese Variante der Holzbehandlungsvorrichtung eine Hülse, die um den zylindrischen Hohlkörper anliegt, und die die eine Austrittsöffnung oder die mehreren Austrittsöffnungen in einem Nichtanwendungszustand der Holzbehandlungsvorrichtung verschließt und in einem Anwendungszustand der Holzbehandlungsvorrichlung freigibt und den Aufnahmeraum mit dem Holz in Kontakt bringt. In Bezug auf die Hülsen-Variante wird dasselbe quasi drucklose Überführen der Holzbehandlungssubstanz in das Holz ausgeübt, wie in Bezug auf die "Schubsliftvariante" beschrieben.

Generell kann/können die eine oder mehrere Austrittsöffnung(en) des zylindrischen Hohlkörpers an dessen Mantelfläche vorliegen. Sind mehrere Austrittsöffnungen vorgesehen, können diese regelmäßig oder unregelmäßig über die Mantelfläche verteilt angeordnet sein. Die Form der einen oder mehrere Austrittsöffnung(en) kann rund oder länglich sein. So können die auf der Mantelfläche liegenden Austrittsöffnungen des zylindrischen Hohlkörpers verschiedene Formen aufweisen. Es können beispielsweise in den zylindrischen Hohlkörper gebohrte Löcher oder Langlöcher, aber auch Schlitze in Längs- oder Querrichtung sein. Denkbar sind auch schraubenförmig entlang der Mantelfläche gewundene Schlitze oder polygonale Ausschnitte. Die Anzahl und Anordnung dieser Austrittsöffnungen kann unterschiedlich gewählt sein. So sind beispielsweise eine oder mehrere Reihen von Austrittsöffnungen, aber auch zufällig und/oder ungleich verteilte Austrittsöffnungen möglich.

Das Verfahren zur Behandlung sieht vor, die Holzbehandlungsvorrichtung zur Verwendung in das Holz einzuschieben oder einzuschlagen und dabei die Hülse zurückzuschieben, oder hinsichtlich ihrer Länge so zu komprimieren, dass die Austrittsöffnungen in oder nahe an den zu behandelnden Stellen liegen. Durch das Wegschieben der Hülse werden die Austrittsöffnung(en) frei gegeben. Der Aufnahmeraum wird so mit dem umliegenden Holz in Kontakt gebracht. Mit direktem oder auch indirektem Kontakt des Trägermaterials mit dem Holz kann sich der Holzbehandlungswirkstoff auch bei dieser Variante vom Trägermaterial aus ausbreiten und auf das Holz übergehen. Der zylindrische Hohlkörper verbleibt, wie oben angegeben, im Holz.

In einer Ausführungsform der Holzbehandlungsvorrichtung weist die Hülse ein elastisches Material, beispielsweise aus der Gruppe der Materialien, die Silikon, Kunststoff und Gummi umfasst, auf. Die Hülse ist verschiebbar oder hinsichtlich ihrer Länge komprimierbar um den zylindrischen Hohlkörper angeordnet. Beim Übergang in den Anwendungszustand, dem Einschieben oder Einschlagen, gegebenenfalls Eindrücken der Holzbehandlungsvorrichtung in das Holz, wird die Hülse vom umliegenden Holz zurückgehalten, so dass die Hülse entlang des zylindrischen Hohlkörpers verschoben oder zusammengeschoben wird. Dabei wird/werden vom Innenende des zylindrischen Hohlkörpers her die Aufnahmeöffnung(en) freigegeben.

Der Aufnahmeraum kann in der Variante mit Hülse vorteilhaft durch zumindest eine Wandung in Kammern unterteilt sein. Jede der Kammern weist zumindest eine der Austrittsöffnungen auf. Die Wandung kann dabei den Aufnahmeraum in mehrere in axialer Richtung hintereinander angeordnete Kammern unterteilen. Sie kann jedoch auch selbst in axialer Richtung verlaufen und damit den Aufnahmeraum in mehrere rundum verteilte Kammern aufteilen. So ist es möglich, den zylindrischen Hohlkörper bspw. über einen längeren Zeitraum stückweise in das Holz einzutreiben und dabei immer weitere Kammern zu öffnen.

Am Innenende kann der zylindrische Hohlkörper eine Einschlagspitze aufweisen, die das Einschlagen oder Einschieben der Holzbearbeitungsvorrichtung erleichtert, indem sie das Verdrängen des Holzes beim Einbringen des zylindrischen Hohlkörpers erleichtert.

Der zylindrische Hohlkörper weist bei dieser Variante in einer Ausführungsform an seinem Außenende einen Kopf auf. Dieser Kopf kann ein abgeflachter Einschlagkopf sein, so dass die Holzbearbeitungsvorrichtung beispielsweise mit einem Hammer in das Holz eingetrieben werden kann. Dies ist bei massivem Holz vorteilhaft, da sonst der zylindrische Hohlkörper durch das Aufschlagen mit dem Hammer verformt werden kann. Der Kopf kann jedoch auch als eine Art Griff ausgebildet sein, der ein Greifen der Holzbehandlungsvorrichtung mit den Fingern ermöglicht. So sind knaufartige oder kugelförmige Griffe möglich.

Der Kopf der Holzbehandlungsvorrichtung kann ferner abnehmbar sein, so dass das Trägermaterial einfach vom Außenende des zylindrischen Hohlkörpers in den Aufnahmeraum eingefüllt werden kann, bevor der Kopf aufgesetzt wird. Es ist damit auch möglich, dass die Holzbearbeitungsvorrichtung durch Abnehmen des Kopfes erneut befüllt wird, wobei dies innerhalb des Holzes vorgenommen werden kann oder die Holzbehandlungsvorrichtung dazu aus dem Holz entnommen werden kann.

Der Kopf zum wieder Befüllen kann ferner als speziell ausgebildeter Kopf mit Öffnung beschaffen sein.

Die Holzbehandlungsvorrichtung kann aus unterschiedlichen Materialien hergestellt werden. In einer Ausführungsform der ersten Variante bestehen der zylindrische Hohlkörper aus Aluminium und der Schubstift aus Messing. In einer Ausführungsform der zweiten Variante besteht ein Abschnitt des zylindrischen Hohlkörpers, der zwischen dem Kopf und der Einschlagspitze liegt, aus Aluminium und zumindest einer der Abschnitte Einschlagspitze und Kopf aus Messing oder Stahl. Es sind aber auch andere, vorteilhaft härtere Materialien möglich, mit denen eine höhere Festigkeit beim Einschlagen in massives Holz erreicht wird. Für die Holzbehandlung von lebendem Holz an Baumstämmen oder Åsten können alle Abschnitte aus Edelstahl hergestellt werden, so dass eine Korrosion oder ein Übergang von Bestandteilen in das Holz ausgeschlossen werden kann. Wenn bei Vorliegen eines Loches, in das die Holzbehandlungsvorrichtung aufgenommen werden soll, die Härte nicht entscheidend ist, so sind auch Varianten aus Holz oder Kunststoff denkbar.

Die Holzbehandlungsvorrichtung ist in einer Ausführungsform derart ausgebildet, dass sie das Loch, in das sie zur Holzbehandlung eingesteckt wurde oder das durch das Einschlagen entstanden ist, wasserundurchlässig verschließt. Insbesondere das Loch im Holz, in dem der zylindrische Hohlkörper in dem Anwendungszustand der Holzbehandlungsvorrichtung steckt, kann durch den Kopf wasserundurchlässig verschlossen werden. So kann das Eindringen weiterer Feuchtigkeit, die das Ausbreiten von Fäule begünstigt, verhindert werden.

Die Holzbehandlungsvorrichtung kann an der Außenseite der Mantelfläche des zylindrischen Hohlkörpers auch Verankerungen aufweisen, die die Holzbehandlungsvorrichtung im Anwendungszustand im Holz festhalten. Diese Verankerungen sind am Innenende des zylindrischen Hohlkörpers angeordnet, an dem keine Austrittsöffnungen vorliegen, so dass auch die Hülse nicht an diesem Bereich des zylindrischen Hohlkörpers liegt. Ein Verschieben der Hülse zum Außenende hin ist dadurch weiterhin möglich. Die Verankerungen können widerhakenartig ausgebildet sein, so dass sie ein Einschieben bzw. Einschlagen ins Holz erlauben, nicht jedoch ein Herausziehen bzw. ein Herausrutschen der Holzbehandlungsvorrichtung. Mit den Verankerungen bildet der zylindrische Hohlkörper eine Art Dübel, der in einem Loch verankert wird.

Ein erfindungsgemäßes Verfahren zur Behandlung von Holz, erfolgt unter Einsatz einer der erfindungsgemäßen Holzbehandlungsvorrichtungen. Das Verfahren umfasst folgende Schritte:
a) Bereitstellen der Holzbehandlungsvorrichtung,
b) Eintreiben der Holzbehandlungsvorrichtung in das Holz,
c) Öffnen der zumindest einen Austrittsöffnung durch Verschieben des Schubstifts oder Verschieben der Hülse oder Komprimieren der Länge der Hülse, und durch das Öffnen der Austrittsöffnungen in Kontakt Bringen des Aufnahmeraums mit dem Holz, dadurch Auslassen des Holzbehandlungswirkstoffs,
d) Zurücklassen der Holzbehandlungsvorrichtung in dem Holz,
wobei das Auslassen des Holzbehandlungswirkstoffs ohne Druckbeaufschlagung erfolgt.

Die Holzbehandlungsvorrichtung gemäß der zweiten Variante mit Hülse wird an das Holz angesetzt und eingebracht, dabei trennen sich Hülse und zylindrischer Hohlkörper, oder zumindest schiebt sich die Hülse Richtung Kopf. Der zylindrische Hohlkörper wird in das Holz getrieben und verbleibt dort. Indem die Hülse entfernt bzw. zurückgeschoben wird, liegen die Austrittsöffnungen frei an dem Holz an und der Holzbehandlungswirkstoff kann über die Austrittsöffnungen von dem Aufnahmeraum in das Holz ausgelassen werden.

Nach einer weiteren Ausführungsform des erfindungsgemäßen Verfahrens wird in Schritt b) die Holzbehandlungsvorrichtung in ein im Holz vorhandenes Loch eingetrieben. Dabei kann dieses Loch durch eine Entnahme einer Holzprobe, durch eine Bohrwiderstandmessung oder eine ähnliche Holzprüfung entstanden der speziell für die Behandlung gebohrt worden sein. Das Loch kann schon längere Zeit in dem Holz sein oder erst kurz vor dem Einbringen der Holzbearbeitungsvorrichtung entstanden sein.

Weiter kann vor Schritt a) vorgesehen sein.
a') Entnehmen einer Holzprobe des Holzes zur Untersuchung auf Fäulnis,
a") Untersuchung der Holzprobe auf verursachende Pilzart,
a''') Auswählen geeigneter Holzbehandlungswirkstoffe.

Dabei kann das Verfahren das Einbringen des ausgewählten Holzbehandlungswirkstoffs beinhalten. Es ist dabei nicht ausschlaggebend, ob die Entnahme und Untersuchung der Holzprobe zeitlich beabstandet von der Holzbehandlung vorgenommen wird oder unmittelbar vorher.

Bei der Holzbehandlung muss die Holzbehandlungsvorrichtung nicht vollständig in das Holz eingeschoben oder geschlagen werden. Es ist vielmehr sinnvoll, dass die Holzbehandlungsvorrichtung nur bis zu einer vorbestimmten Tiefe in das Holz eingetrieben wird, so dass die Austrittsöffnungen so platziert sind, dass das Trägermaterial und damit der Holzbehandlungswirkstoff gezielt in und neben der befallenen Stelle bzw. der vorbeugend zu behandelnden Stelle abgegeben wird.

Zur Bereitstellung der Holzbehandlungssubstanz wird das gelartige Trägermaterial aus Wasser und superabsorbierendem Polymer hergestellt, in das der Pilz eingearbeitet wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen :
- **Fig. 1**: einen Längsschnitt durch ein erfindungsgemäß behandeltes, imprägniertes Holzstück mit Fäulnis mit darin verbliebenem zylindrischen Hohlkörper der Holzbehandlungsvorrichtung,
- **Fig. 2**: eine Seitenansicht einer Holzbehandlungsvorrichtung,
- **Fig. 3**: einen Längsschnitt durch eine Holzbearbeitungsvorrichtung nach Variante eins in Nichtanwendungsanordnung,
- **Fig. 4**: einen Längsschnitt durch eine Holzbearbeitungsvorrichtung in Anwendungsanordnung mit eingeschobenem Schubstift,
- **Fig. 5**: einen Längsschnitt durch eine Holzbearbeitungsvorrichtung ohne stirnseitige Austrittsöffnung,
- **Fig. 6**: eine perspektivische Detailansicht einer Holzbehandlungsvorrichtung in Anwendungsanordnung,
- **Fig. 7**: eine perspektivische Detailansicht einer Holzbehandlungsvorrichtung in Nichtanwendungsanordnung,
- **Fig. 8**: eine Seitenansicht des zylindrischen Hohlkörpers einer Holzbehandlungsvorrichtung nach Variante zwei, aber noch ohne Hülse,
- **Fig. 9**: einen Längsschnitt durch einen zylindrischen Hohlkörper für die Holzbearbeitungsvorrichtung aus Fig. 8, noch ohne Hülse und ohne Trägermaterial,
- **Fig. 10**: einen Längsschnitt durch eine Holzbearbeitungsvorrichtung mit Hülse,
- **Fig. 11**: einen Längsschnitt durch eine Holzbearbeitungsvorrichtung mit mehreren Kammern,
- **Fig. 12**: eine perspektivische Detailansicht des zylindrischen Hohlkörpers einer Holzbehandlungsvorrichtung nach Variante zwei ohne Hülse,
- **Fig. 13**: eine perspektivische Detailansicht einer Holzbehandlungsvorrichtung nach Variante zwei mit Hülse.

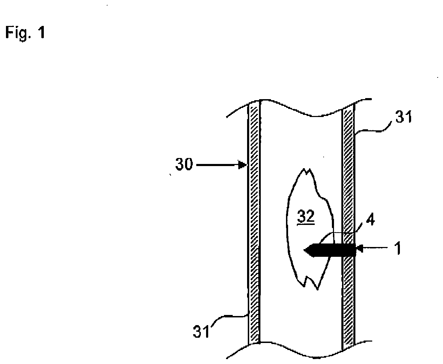

**Fig. 1** zeigt die Anwendung der Holzbehandlungsvorrichtung 1. Dabei ist die Holzbehandlungsvorrichtung 1 bzw. deren zylindrischer Hohlkörper 2 in einen Holzmasten oder einen Stamm 30 eingebracht, der einen imprägnierten Bereich 31 und einen befallenen Bereich 32 aufweist. Dabei wird die Holzbehandlungsvorrichtung 1 so in das Holz eingebracht, dass sie den befallenen Bereich 32 erreicht und die Austrittsöffnungen 4 in oder nahe diesem Bereich liegen und sich von dort der Holzbehandlungswirkstoff ausbereiten kann.

Dabei muss die Holzbehandlungsvorrichtung 1 nicht zwingend vollständig in das Holz eingeschlagen werden. Die Einschlagtiefe kann derart gewahlt werden, dass die Austrittsöffnungen 4 in der gewünschten Position liegen. Die Holzbearbeitungsvorrichtung 1 kann so ausgestaltet sein, dass sie das Loch, in das sie eingesteckt wurde oder das durch das Eintreiben entstanden ist, wasserundurchlässig verschließt. So kann das Eindringen von Wasser verhindert werden.

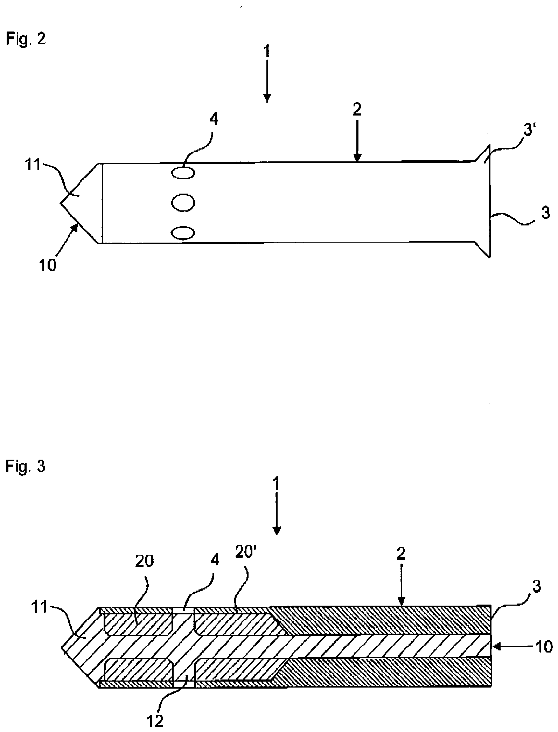

Zur Verankerung bzw. Befestigung im Holz kann die Holzbehandlungsvorrichtung 1 Verankerungen aufweisen. Diese sind vorteilhaft an der Außenseite der Mantelfläche des zylindrischen Hohlkörpers 2 angeordnet und halten die Holzbearbeitungsvorrichtung 1 im Holz fest. Diese Verankerungen sind nicht in den Figuren dargestellt. Die Vorrichtung 1 bezieht sich auf eine Holzbehandlungsvorrichtung 1 wie sie beispielhaft in **Fig. 2** oder 3 gezeigt ist. Diese Holzbehandlungsvorrichtung 1 ist aus einem zylindrischen Hohlkörper 2 und einem Schubstift 10 zusammengesetzt und bildet eine erste Variante der Holzbearbeitungsvorrichtung. Es liegt ein Aufnahmeraum 20' vor, der Trägermaterial 20 mit einem Holzbehandlungswirkstoff aufnehmen kann. Zur Behandlung bereit ist die Holzbehandlungsvorrichtung 1, wenn sie fertig befüllt ist mit der Holzbehandlungssubstanz, die eine Zusammensetzung zumindest aus einem Holzbehandlungswirkstoff und einem Trägermaterial aufweist, wobei die Holzbehandlungssubstanz für die Behandlung des Holzes gegen den Befall durch einen ersten Pilz ausgebildet ist und daher als Holzbehandlungswirkstoff einen als Antagonist gegen den ersten Pilz wirkenden zweiten Pilz und/oder dessen Pilzsporen aufweist. Das Trägermaterial ist ein Gel aus Liquid und einem superabsorbierenden Polymer. Zusätze können enthalten sein.

Die Holzbehandlungssubstanz kann für unterschiedliche Anwendungen mit unterschiedlichen Holzbehandlungswirkstoffen beschaffen sein.

Der zylindrische Hohlkörper 2 beider Varianten hat ein Innenende, das bei der Anwendung innerhalb des Holzes liegt und ein davon abgewandtes Außenende sowie zumindest eine Auftrittsöffnung 4.

Diese zumindest eine Austrittsöffnung 4 wird aber nur in Variante eins im Nichtanwendungszustand von zumindest einem Verschlussabschnitt 12 des Schubstiftes 10 verschlossen und kann im Anwendungszustand durch Verschieben des Schubstiftes 10 und damit des Verschlussabschnitts 12 freigegeben werden. Der Schubslift 10 erstreckt sich entlang der Längsachse des zylindrischen Hohlkörpers 2 und ist von außerhalb des zylindrischen Hohlkörpers 2 verschiebbar.

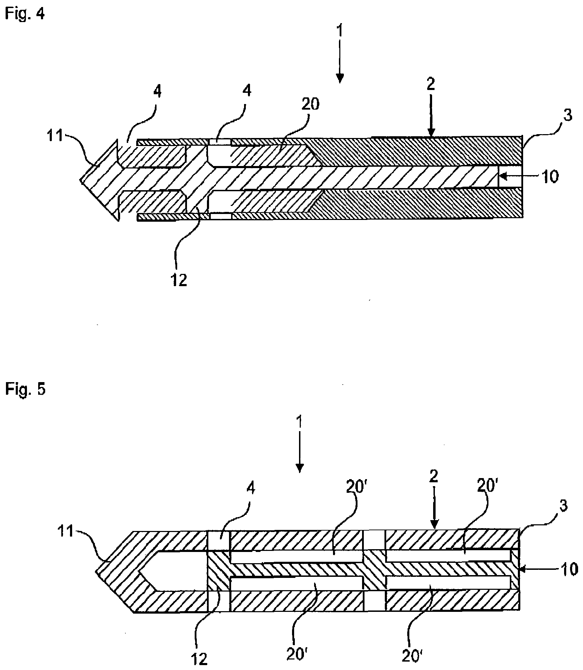

**Fig. 4** zeigt die Holzbearbeitungsvorrichtung 1 aus **Flg. 3** mit verschobenem Schubstift 10. In der dargestellten Ausführungsform hat der zylindrische Hohlkörper 2 eine Austrittsöffnung 4 an seiner am Innenende liegenden Stirnseite und mehrere Austrittsöffnungen 4 auf seiner Mantelfläche, die auf einer Umfangslinie verteilt sind. Diese Austrittsöffnungen 4 werden jeweils von den Verschlussabschnitten 12 des Schubstiftes 10 verschlossen bzw. freigegeben. Wie in der Abbildung nicht zu unterscheiden ist, kann dabei ein Verschlussabschnitt 12 mehrere Austrittsöffnungen 4, in **Fig. 3** und **Fig. 4** alle auf der Mantellinie des zylindrischen Hohlkörpers 2 liegenden Austrittsöffnungen 4, verschließen, wobei der Verschlussabschnitt 12 eine scheibenförmige Gestalt hat, die sich von einem zentralen Zylinder des Schubstiftes 10 radial nach außen erstreckt, oder es verschließen mehrere Verschlussabschnitte 12 jeweils eine Austrittsöffnung 4, wobei die Verschlussabschnitte 12 eine prismatische Form mit der Form der jeweiligen Austrittsöffnung 4 als Grundfläche aufweisen und sich ebenfalls radial vom zentralen Zylinder des Schubstiftes 10 zum zylindrischen Hohlkörper 2 nach außen erstrecken. Nicht dargestellt sind andere Varianten der Verschlussabschnitte 12, bei denen eine andere Form gewählt wird, so dass jeweils eine oder mehrere Austrittsöffnungen 4 verschlossen werden. So sind ringförmige Ausführungen möglich oder solche, bei denen der Schubstift 10 kein zentrales Element aufweist, sondern die Verschlussabschnitte 12 durch Streben oder einen käfigartigen Aufbau verbindet.

Auch die stirnseitige Austrittsöffnung 4 wird durch einen Verschlussabschnitt 12 verschlossen bzw. freigegeben. Dieser Verschlussabschnitt 12 ist in der dargestellten Ausführung als Einschlagspitze 11 ausgeführt. So ist die Einschlagspitze 11 Teil des Schubstiftes 10. Durch Verschieben des Schubstiftes 10 wird die Einschlagspitze 11 von dem zylindrischen Hohlkörper 2 abgehoben und der dahinter liegende Aufnahmeraum 20' geöffnet und im Anwendungszustand mit dem Holz in Kontakt gebracht. Die Einschlagspitze 11 erleichtert das Einbringen der Holzbehandlungsvorrichtung 1 in das Holz. So ist es auch möglich, die Holzbehandlungsvorrichtung 1 in massives Holz einzuschlagen, ähnlich wie ein Nagel eingeschlagen wird.

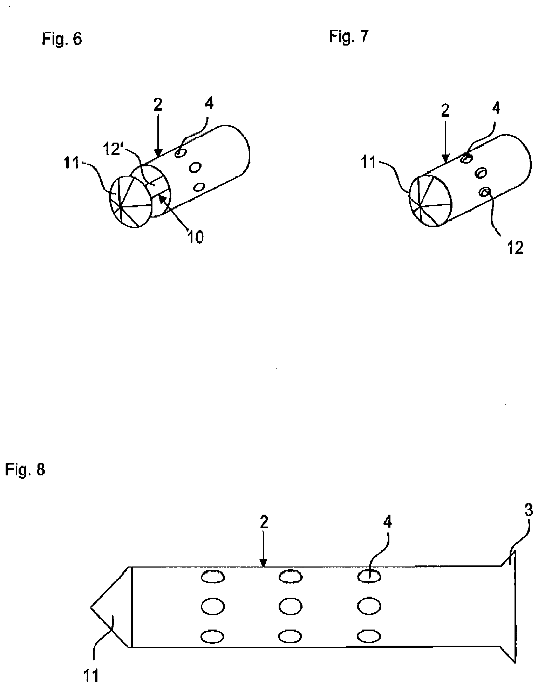

Diese Ausführungsform ist auch in den **Fig. 6** und 7 dargestellt. Dabei zeigt **Fig. 7** die Holzbehandlungsvorrichtung 1 in geschossenem Nichtanwendungszustand. Hier sind die Austrittsöffnungen 4 auf der Mantelfläche des zylindrischen Hohlkörpers 2 ebenso verschlossen wie die stirnseitige Austrittsöffnung 4. In **Fig. 6** ist der geöffnete Zustand dargestellt wie er innerhalb des Holzes im Anwendungszustand auftritt. Hier sind die stirnseitige Austrittsöffnung 4 und die Austrittsöffnungen 4 an der Mantelfläche freigegeben.

Die Austrittsöffnungen 4 können unterschiedliche Formen aufweisen. In **Fig. 3** und **Fig. 4** sind ovale Austrittsöffnungen 4 in der Mantelfläche des zylindrischen Hohlkörpers 2 dargestellt. Diese können jedoch auch runde, polygone, längliche oder andere herstellbare

Formen aufweisen. So sind auch verschiedene Formen der Austrittsöffnungen 4 innerhalb einer Holzbehandlungsvorrichtung 1 möglich. Auch die Anzahl der Austrittsöffnungen 4 kann variieren, so kann nur eine einzige Austrittsöffnung 4 genauso vorliegen wie eine Vielzahl an Austrittsöffnungen 4, die in bestimmten Anordnungen wie eine oder mehrere Reihen oder spiralförmig, aber auch unregelmäßig verteilt sein können. Auch eine Variante mit ausschließlich einer stirnseitigen Austrittsöffnung 4 ist möglich.

**Fig. 5** zeigt eine Ausführungsform der Holzbahandlungsvorrichtung 1, bei der der zylindrische Hohlkörper 2 an seiner auf der Innenseite liegenden Stirnseite verschlossen ist, so dass hier keine Austrittsöffnung 4 vorliegt. Die Innenseite des zylindrischen Hohlkörpers 2 bildet die Einschlagspitze 11. So kann der Schubstift 10 in dem zylindrischen Hohlkörper 2 verschoben werden, ohne dass dieser weiter in das Holz getrieben werden muss. In der dargestellten Ausführungsform ist es sogar möglich, den Schubstift 10 aus dem zylindrischen Hohlkörper 2 zu entnehmen und gegebenenfalls das Trägermaterial 20 mit dem Holzbehandlungswirkstoff zu tauschen oder zu erneuern.

Nicht dargestellt sind weiterentwickelte Ausführungsformen, bei denen der Schubstift 10 in mehreren Schritten verschoben wird und dabei nach und nach weitere bzw. andere Austrittsöffnungen 4 freigibt und damit auch andere Aufnahmeräume 20' mit dem Holz in Verbindung bringt. Dazu kann der Schubstift 10 unterschiedlichst gestaltet werden. So können die Verschlussabschnitte 12 so geformt sein, dass ein oder wenige große Aufnahmeräume 20' gebildet werden, die einer oder mehreren Austrittsöffnungen 4 zugeordnet sind oder es werden mehrere Aufnahmeräume 20' gebildet, die jeweils mindestens einer Auftrittsöffnung 4 zugeordnet sind. Auch kann der Schubstift 10 so gestaltet sein, dass er durch eine Drehbewegung um seine Längsachse verschoben wird. So können mehrere Aufnahmeräume 20', die sich entlang der Längsachse erstrecken, durch längliche Austrittsöffnungen 4 mit dem Holz verbunden werden.

In **Fig. 2** ist eine Ausführungsform dargestellt, bei der das Außenende des zylindrischen Hohlkörpers 2 einen Kopf 3 aufweist, der als abgeflachter Einschlagkopf 3' ausgebildet ist. Dieser abgeflachte Einschlagkopf 3' bildet die Schlagfläche, wenn die Holzbehandlungsvorrichtung 1 in massives Holz oder ein kleineres Loch eingetrieben werden muss.

Der Kopf 3 kann unterschiedlich gestaltet sein. So kann anstelle des abgeflachten Einschlagkopfes 3' auch ein offenes Ende des zylindrischen Hohlkörpers 2 den Kopf bilden.

Dabei kann das Außenende des zylindrischen Hohlkörpers 2 so gestaltet sein, dass ein einfaches Eindrücken des Schubstiftes 10 oder ein besserer Zugang zum Schubstift 10 gewährleistet wird. Eine ebenfalls nicht dargestellte Ausführungsform weist als Kopf 3 einen Griff auf, mit dem die Holzbearbeitungsvorrichtung 1 zwischen den Fingern gehalten werden kann, so dass diese einfacher in ein Loch im Holz eingebracht werden kann. Dieser Griff kann kugelförmig oder knaufartig ausgeführt oder sogar ergonomisch an die Form der Finger beim Greifen angepasst sein.

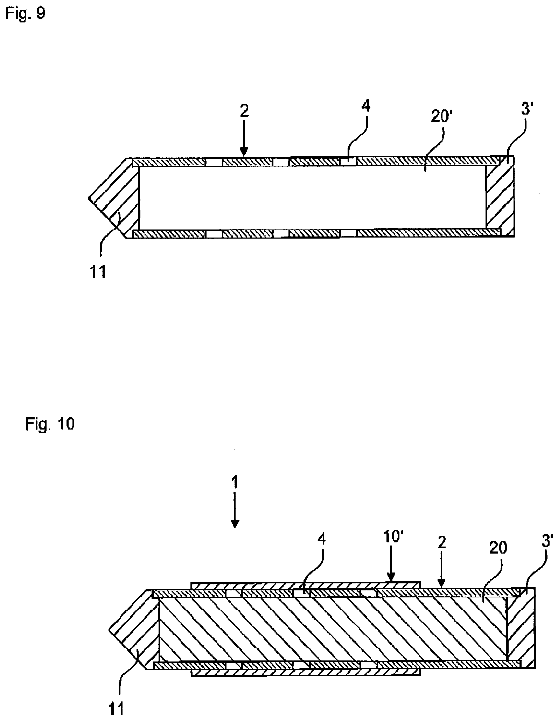

Die erfindungsgemäße Holzbehandlungsvorrichtung 1 kann auch als "Hülsen-Variante" ohne Schubstift ausgestaltet sein; wie sie in **Fig. 10****,****11** und **13** gezeigt ist.

Diese Holzbehandlungsvorrichtung 1 wird aus einem zylindrischen Hohlkörper 2 wie etwa gezeigt in **Fig. 8****,** **9** und **12** und einer Hülse 10' gebildet. Dabei hat der zylindrische Hohlkörper 2 den Aufnahmeraum 20' für das Trägermaterial 20 mit dem Holzbehandlungswirkstoff, wie er erfindungsgemäß auch schon für Variante 1 beschrieben ist.

Die fertig befüllte Holzbehandlungsvorrichtung 1 ist benutzungs- und behandlungsbereit.

Der zylindrische Hohlkörper 2 hat hier ein Innenende, das bei der Anwendung innerhalb des Holzes liegt und ein davon abgewandtes Außenende sowie mehrere elliptische Austrittsöffnungen 4.

Diese Austrittsöffnungen 4 sind in dieser Variante im Nichtanwendungszustand von der Hülse 10 verschlossen und können im Anwendungszustand durch Verschieben oder Komprimieren der Länge der Hülse 10' freigegeben werden. Die Hülse 10' ist über den zylindrischen Hohlkörper 2 gezogen und liegt um diesen an. Dabei kann die Hülse 10' aus einem elastischen Material und durch den zylindrischen Hohlkörper 2 leicht gespannt sein, so dass diese fester auf dem zylindrischen Hohlkörper 2 sitzt und nicht unbeabsichtigt verschoben wird - figurativ nicht zu sehen. Die Hülse 2 könnte aber auch aus starrem Material wie Kunststoff, Holz oder Metall bestehen. Dann ist ihr innerer Durchmesser an den Außendurchmesser des zylindrischen Hohlkörpers 2 angepasst, so dass die Innenseite der Hülle 10' dennoch auf der Mantelfläche des zylindrischen Hohlkörpers 2 anliegt und verschiebbar ist.

Nicht figurativ dargestellt ist die Situation während des Einschiebens der Holzbehandlungsvorrichtung in Holz. Hier wird beispielsweise durch die Einschlagspitze ein Loch geformt, oder das Loch liegt alternativ, etwa durch einen Bohrer vorbereitet, schon vor. In das Loch, dessen Innendurchmesser dem Außendurchmesser des zylindrischen Hohlkörpers entspricht, wird dieser in das Holz eingebracht. Die Hülse wird durch das Holz zurückgehalten, da der Außenumfang aus zylindrischem Hohlkörper und Hülse größer ist als das Loch. Die Hülse wird verschoben und gibt die Austrittsöffnungen frei. Dabei werden nach und nach die Austrittsöffnungen, die bereits innerhalb des Holzes liegen, freigegeben. Eine weichere, resp. elastische Hülse kann, anstatt sie zu verschieben auch hinsichtlich ihrer Länge komprimiert werden. Dabei wird das innere Ende der Hülse zum äußeren Ende hin gedrückt und die Hülse wellt sich, so dass sie in Längsrichtung des zylindrischen Hohlkörpers eine kleinere Ausdehnung bekommt.

**Fig. 8** und **9** zeigen den zylindrischen Hohlkörper 2 der Holzbearbeitungsvorrichtung 1 aus **Fig.10** mit mehreren Austrittsöffnungen 4 auf seiner Mantelfläche, die auf drei Umfangslinien verteilt sind.

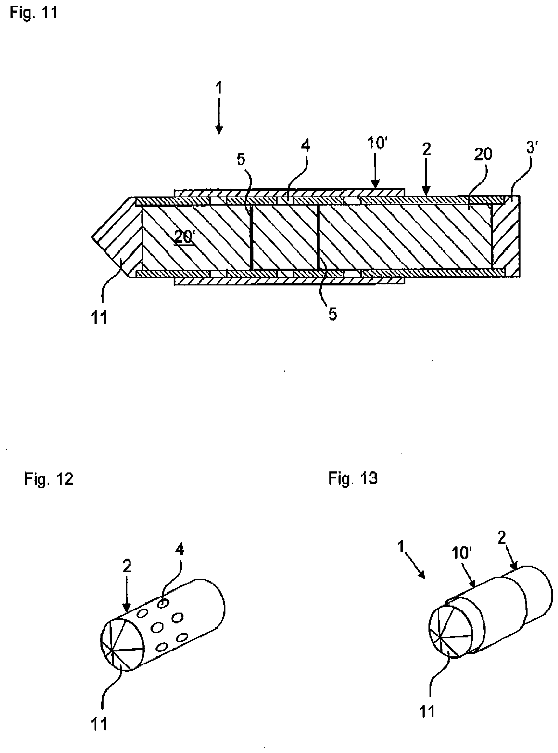

In der **Fig.12** ist der zylindrische Hohlkörper 2 mit zwei Reihen Austrittsöffnungen 4 dargestellt. **Fig. 13** zeigt die Holzbehandlungsvorrichtung 1 in geschlossenem Nichtanwendungszustand. Hier sind die Austrittsöffnungen 4 auf der Mantelfläche des zylindrischen Hohlkörpers 2 durch die Hülse 10' verschlossen. In **Fig. 12** ist der geöffnete Anwendungszustand dargestellt, wie er innerhalb des Holzes auftritt. Hier sind die Austrittsöffnungen 4 an der Mantelfläche freigegeben, die Hülse 10' ist bereits vollständig abgestreift.

Die Austrittsöffnungen 4 können unterschiedliche Formen aufweisen. In den **Figuren** sind ovale Austrittsöffnungen 4 in der Mantelfläche des zylindrischen Hohlkörpers 2 dargestellt. Diese können jedoch auch runde, polygonale, längliche oder andere Formen aufweisen. So sind auch verschiedene Formen der Austrittsöffnungen 4 des zylindrischen Hohlkörpers 2 möglich. Auch die Anzahl der Austrittsöffnungen 4 kann variieren; so ist es ebenso möglich, dass nur eine einzige Austrittsöffnung 4 vorliegt, wie eine Vielzahl an Austrittsöffnungen 4, die in bestimmten Anordnungen, wie eine oder mehrere Reihen oder spiralförmig, aber auch unregelmäßig verteilt sein können.

**Fig.11** zeigt eine Holzbehandlungsvorrichtung 1, bei der der zylindrische Hohlkörper 2 im Inneren Wandungen 5 aufweist, die den Aufnahmeraum 20' in mehrere Kammern unterteilt. Dargestellt ist eine Unterteilung in Kammern, die in Längsrichtung des zylindrischen Hohlkörpers 2 hintereinander angeordnet sind.

Nicht dargestellt ist eine Unterteilung durch Wandungen, die in Längsrichtung des zylindrischen Hohlkörpers angeordnet sind. Die Kammern verlaufen dann ebenfalls in Längsrichtung. Auch Wandungen in unterschiedlichen Ausrichtungen und sich überschneidende Wandungen sind denkbar, so dass ein oder wenige große Aufnahmeräume gebildet werden können, die einer oder mehreren Austrittsöffnungen zugeordnet sind oder es werden mehrere Aufnahmeräume gebildet, die jeweils mindestens einer Austrittsöffnung zugeordnet sind.

In **Fig. 9** ist eine Ausführungsform dargestellt, bei der das Außenende des zylindrischen Hohlkörpers 2 einen Kopf 3 aufweist, der als abgeflachter Einschlagkopf 3' ausgebildet ist- Dieser abgeflachte Einschlagkopf 3' bildet die Schlagfläche, wenn die Holzbehandlungsvorrichtung 1 in massives Holz oder ein kleineres Loch eingetrieben werden muss.

Der Kopf 3 kann unterschiedlich gestaltet sein. So kann anstelle des abgeflachten Einschlagkopfes 3' auch ein offenes Ende des zylindrischen Hohlkörpers 2 den Kopf 3 bilden.

Eine ebenfalls nicht dargestellte Ausführungsform weist als Kopf einen Griff auf, mit dem die Holzbearbeitungsvorrichtung 1 zwischen den Fingern gehalten werden kann, so dass diese einfacher in ein Loch im Holz eingebracht werden kann. Dieser Griff kann kugelförmig oder knaufartig ausgeführt oder sogar ergonomisch an die Form der Finger beim Greifen angepasst sein.

In **Fig. 8** ist das Innenende des zylindrischen Hohlkörpers 2 eine Einschlagspitze 11. Die Einschlagspitze 11 erleichtert das Einbringen der Holzbehandlungsvorrichtung 1 in das Holz. So ist es auch möglich, die Holzbehandlungsvorrichtung 1 wie einen Nagel in massives Holz einzuschlagen.

### BEZUGSZEICHENLISTE

- 1: Holzbehandlungsvorrichtung
- 2: Zylindrischer Hohlkörper
- 3: Kopf
- 3': Abgeflachter Einschlagkopf
- 4: Austrittsöffnung
- 5: Wandung
- 10: Schubstift
- 10': Hülse
- 11: Einschlagspilze
- 12: Verschlussabschnitt
- 20: Trägermaterial
- 20': Aufnahmeraum
- 30: Mast/Baumstamm
- 31: Imprägnierter Bereich
- 32: Befallener Bereich

## Patentansprüche

1. Holzbehandlungssubstanz, die eine Zusammensetzung zumindest aus einem Holzbehandlungswirkstoff und einem Trägermaterial (20) aufweist, wobei die Holzbehandlungssubstanz für die Behandlung des Holzes gegen den Befall durch einen ersten Pilz ausgebildet ist,
**dadurch gekennzeichnet, dass**
der Holzbehandlungswirkstoff einen als Antagonist gegen den ersten Pilz wirkenden zweiten Pilz und/oder dessen Pilzsporen aufweist und das Trägermaterial (20) ein Liquid und ein superabsorbierendes Polymer aufweist und gelartig ist.

2. Holzbehandlungssubstanz nach Anspruch 1,
**dadurch gekennzeichnet, dass**
das superabsorbierende Polymer ein Polyacrylat und der zweite Pilz ein Schimmelpilz, bevorzugt *Trichoderma harzianum, Trichoderma koningiopsis* oder ein Gemisch aus beidem ist.

3. Holzbehandlungssubstanz nach Anspruch 1 oder 2,
**dadurch gekennzeichnet, dass**
das gelartige Trägermaterial (20) als Liquid Wasser aufweist und/oder Nährstoffe für den Pilz, bevorzugt Glukose und/oder Harnstoff aufweist.

4. Holzbehandlungssubstanz nach zumindest einem der Ansprüche 1 bis 3,
**dadurch gekennzeichnet, dass**
die Holzbehandlungssubstanz
1 bis 10 g, vorzugsweise 4 bis 6 g superabsorbierendes Polymer und mindestens 800 000 Sporen pro ml H₂O, bevorzugt 1.000.000 Sporen oder 106 KBE pro ml H₂O aufweist.

5. Holzbehandlungsvorrichtung (1), ausgebildet zur Behandlung von Holz, die ein Innenende, ein von dem Innenende abgewandtes Außenende und einen zylindrischen Hohlkörper (2) mit zumindest einer Austrittsöffnung (4) aufweist, wobei das Innenende und die zumindest eine Austrittsöffnung (4) bei der Anwendung innerhalb des Holzes zu liegen kommen, und wobei der zylindrische Hohlkörper (2) einen Aufnahmeraum (20') aufweist, in dem eine Holzbehandlungssubstanz nach zumindest einem der Ansprüche 1 bis 4 aufgenommen ist, die ein Trägermaterial (20) mit Holzbehandlungswirkstoff aufweist.

6. Holzbehandlungsvorrichtung (1) nach Anspruch 5, wobei diese
- einen Schubstift (10) aufweist, der sich entlang der Längsachse des zylindrischen Hohlkörpers (2) erstreckt, und der an dem Außenende von außerhalb des zylindrischen Hohlkörpers (2) verschiebbar ist,
wobei der Schubstift (10) zumindest einen Verschlussabschnitt (11,12) aufweist, der
- in einem Nichtanwendungszustand der Holzbehandlungsvorrichtung (1) die zumindest eine Austrittsöffnung (4) verschließt und
- in einem Anwendungszustand der Holzbehandlungsvorrichtung (1) nach Verschieben die zumindest eine Austrittsöffnung (4) freigibt und den Aufnahmeraum (20') mit dem Holz in Kontakt bringt.

7. Holzbehandlungsvorrichtung (1) nach Anspruch 5 oder 6,
**dadurch gekennzeichnet, dass**
eine am Innenende des zylindrischen Hohlkörpers (2) liegende, offene Stirnseite die Austrittsöffnung (4) bildet, und der Schubstift (10) eine Einschlagspitze (11) als Verschlussabschnitt (11,12) aufweist, wobei die Einschlagspitze (11) das Innenende der Holzbehandlungsvorrichtung (1) bildet und in dem Nichtanwendungszustand die stirnseitige Austrittsöffnung (4) verschließt,
oder die am Innenende des zylindrischen Hohlkörpers (2) liegende Stirnseite geschlossen ist, wobei bevorzugt
die am Innenende des zylindrischen Hohlkörpers (2) liegende Stirnseite als eine Einschlagspitze (11) ausgebildet ist.

8. Holzbehandlungsvorrichtung (1) nach zumindest einem der Anspruch 5 bis 7, **dadurch gekennzeichnet, dass**
der zylindrische Hohlkörper (2) an seiner Mantelfläche zumindest eine Austrittsöffnung (4) aufweist, die rund oder länglich ist,
und/oder dass der zylindrische Hohlkörper (2) in seiner Mantelfläche mehrere Austrittsöffnungen (4) regelmäßig oder unregelmäßig über die Mantelfläche angeordnet aufweist.

9. Holzbehandlungsvorrichtung (1) nach Anspruch 8,
**dadurch gekennzeichnet, dass**
der Schubstift (10) Verschlussabschnitte (12) aufweist, die sich radial von einem zentralen Zylinder zum zylindrischen Hohlkörper (2) der Holzbehandlungsvorrichtung (1) erstrecken, wobei die Verschlussabschnitte (12) einzelne Stifte in prismatischer Form sind oder eine gemeinsame scheiben- oder ringförmige Form aufweisen, wobei die Verschlussabschnitte (12) in dem Nichtanwendungszustand die zumindest eine Austrittsöffnung (4) an der Mantelfläche des zylindrischen Hohlkörpers (2) verschließt.

10. Holzbehandlungsvorrichtung (1) nach Anspruch 5,
wobei der zylindrische Hohlkörper (2) das Innenende und das Außenende aufweist und wobei die Holzbehandlungsvorrichtung (1) eine Hülse (10') aufweist, die um den zylindrischen Hohlkörper (2) anliegt, und
die die zumindest eine Austrittsöffnung (4)
- in einem Nichtanwendungszustand der Holzbehandlungsvorrichtung (1) verschließt und
- in einem Anwendungszustand der Holzbehandlungsvorrichtung (1) freigibt und den Aufnahmeraum (20') mit dem Holz in Kontakt bringt.

11. Holzbehandlungsvorrichtung (1) nach Anspruch 10,
**dadurch gekennzeichnet, dass**
die Hülse (10') ein elastisches Material aufweist, bevorzugt aus der Gruppe umfassend Silikon, Kunststoff und Gummi, wobei die Hülse (10') verschiebbar oder hinsichtlich ihrer Länge komprimierbar um den zylindrischen Hohlkörper (2) angeordnet ist.

12. Holzbehandlungsvorrichtung (1) nach Anspruch 10 oder 11,
**dadurch gekennzeichnet, dass**
der Aufnahmeraum (20') durch zumindest eine Wandung (5) in Kammern unterteilt ist, wobei jede der Kammern zumindest eine der Austrittsöffnungen (4) aufweist.

13. Holzbehandlungsvorrichtung (1) nach irgend einem der Ansprüche 5 bis 12,
**dadurch gekennzeichnet, dass**
der zylindrische Hohlkörper (2) am Außenende einen Kopf (3) aufweist, wobei der Kopf (3) ein abgeflachter Einschlagkopf (3') oder ein Griff zum Greifen der Holzbehandlungsvorrichtung mit den Fingern ist, wobei bevorzugt der Griff ein knaufartiger Griff ist.

14. Holzbehandlungsvorrichtung (1) nach zumindest einem der Ansprüche 5 bis 13, **dadurch gekennzeichnet, dass**
- der zylindrische Hohlkörper (2) aus Aluminium besteht,
und/oder
- der Schubstift (10) aus Messing oder Edelstahl besteht, und/oder
- ein Abschnitt des zylindrischen Hohlkörpers (2), der zwischen dem Kopf (3) und der Einschlagspitze (11) liegt, aus Aluminium besteht, und zumindest einer der Abschnitte Einschlagspitze (11) und Kopf (3) aus Messing oder aus Edelstahl besteht.

15. Holzbehandlungsvorrichtung (1) nach zumindest einem der Ansprüche 5 bis 14,
**dadurch gekennzeichnet, dass**
die Holzbehandlungsvorrichtung (1) an der Mantelfläche des zylindrischen Hohlkörpers (2) außenseitig Verankerungen aufweist, wobei die Verankerungen dazu ausgebildet sind, die Holzbehandlungsvorrichtung (1) im Anwendungszustand im Holz festzuhalten.

16. Verwendung einer Holzbehandlungsvorrichtung (1) nach zumindest einem der Ansprüche 5 bis 15 mit einer Holzbehandlungssubstanz nach zumindest einem der Ansprüche 1 bis 4 zum Behandeln von Holz, wobei die Holzbehandlungsvorrichtung (1) in ein Holz eingetrieben wird, die zumindest eine Austrittsöffnung (4) der Holzbehandlungsvorrichtung (1) geöffnet wird und zumindest der Holzbehandlungswirkstoff aus der Holzbehandlungssubstanz oder die Holzbehandlungssubstanz in das Holz eindringen gelassen wird.

17. Verfahren zur Behandlung von Holz unter Verwendung einer Holzbehandlungsvorrichtung (1) nach zumindest einem der Ansprüche 5 bis 15,
**umfassend die Schritte,**
a) Bereitstellen der Holzbehandlungsvorrichtung (1),
b) Eintreiben der Holzbehandlungsvorrichtung (1) in das Holz,
c) Öffnen der zumindest einen Austrittsöffnung (4) durch Verschieben des Schubstifts (10) oder Verschieben der Hülse (10') oder Komprimieren der Länge der Hülse (10'), und durch das Öffnen der Austrittsöffnungen (4) in Kontakt Bringen des Aufnahmeraums (20') mit dem Holz, dadurch Auslassen des Holzbehandlungswirkstoffs,
d) Zurücklassen der Holzbehandlungsvorrichtung (1) in dem Holz,
wobei das Auslassen des Holzbehandlungswirkstoffs ohne Druckbeaufschlagung erfolgt.

18. Verfahren nach Anspruch 17, wobei in Schritt b) die Holzbehandlungsvorrichtung (1) in ein im Holz vorhandenes Loch eingetrieben wird und/oder nur bis zu einer vorbestimmten Tiefe in das Holz eingetrieben wird.
